# EUROPÄISCHE PATENTSCHRIFT

(11) **EP 3 610 308 B1**
(45) Veröffentlichungstag und Bekanntmachung des Hinweises auf die Patenterteilung: **25.01.2023**
(21) Anmeldenummer: 18826548.2
(22) Anmeldetag: 13.12.2018
(51) Int. Cl.: G02B 6/00, B60Q 3/64, B60Q 3/14, G09F 13/06, G09F 13/10, G09F 13/14, G09F 23/00, F21V 8/00

(54) **BELEUCHTUNGSVORRICHTUNG UND VERFAHREN ZUR HERSTELLUNG**
LIGHTING DEVICE AND METHOD FOR PRODUCING SAME
DISPOSITIF D'ÉCLAIRAGE ET SON PROCÉDÉ DE FABRICATION

(30) Priorität: 11.01.2018 DE 102018100547
(43) Veröffentlichungstag der Anmeldung: 19.02.2020
(73) Patentinhaber: Dr. Schneider Kunststoffwerke GmbH, 96317 Kronach-Neuses (DE)
(72) Erfinder: SCHINZLER, Claus, 96317 Kronach Bayern (DE); SCHMIDT, Klaus, 95362 Kupferberg (DE)
(86) Internationale Anmeldenummer: PCT/EP2018/084808
(87) Internationale Veröffentlichungsnummer: WO 2019/137733

(56) Entgegenhaltungen:
- EP-A2- 0 159 529
- EP-A2- 3 040 231
- DE-A1-102004 029 248
- DE-A1-102009 011 948
- DE-A1-102015 011 412
- DE-U1-202005 003 918

## Beschreibung

Die vorliegende Erfindung betrifft eine Beleuchtungsvorrichtung, vorzugsweise zum Einsatz im Innenraum eines Kraftfahrzeuges, sowie ein Verfahren zur Herstellung.

Beleuchtungsvorrichtungen für Kraftfahrzeuge, insbesondere zur Beleuchtung von Bedieneinheiten oder Bedientasten im Innenraum eines Kraftfahrzeugs, sind hinlänglich bekannt.

So ist aus der DE 20 2004 020 779 U1 ein Beleuchtungssystem für eine Schalthebelanzeige in einem Kraftfahrzeug bekannt. Das Beleuchtungssystem besteht aus einem Träger, einer erster Leuchtdiode, die auf dem Träger angeordnet ist, einer zweiter Leuchtdiode, die ebenfalls auf dem Träger angeordnet ist und einer lichtdurchlässige Abdeckung, die, beabstandet vom Träger, an einer Seite des Trägers angeordnet ist. An oder in der lichtdurchlässigen Abdeckung sind mehrere Symbole vorhanden, die jeweils durch die erste und die zweite Leuchtdiode zu hinterleuchten sind. Zwischen dem Träger und der Abdeckung ist eine Beleuchtungsbegrenzungseinrichtung vorgesehen, die das von der ersten und der zweiten Leuchtdiode emittierte Licht auf das jeweilige zu hinterleuchtende Symbol begrenzt. Zu dieser Begrenzung ist in der Beleuchtungsvorrichtung jeweils mindestens eine Aussparung vorhanden, in welcher das Licht von den Leuchtdioden sich ausbreitet, wobei das Licht der Leuchtdioden von der Beleuchtungsbegrenzungseinrichtung eingeschränkt und an das zu beleuchtende Symbol geleitet wird.

Aus der DE 10 2015 101 465 B4 ist ein beleuchtetes Innenausstattungsteil für ein Kraftfahrzeug bekannt. Dieses beleuchtete Innenausstattungsteil besitzt eine sichtbare Oberfläche, in der ein beleuchteter Abschnitt ausgebildet ist. Es ist weiterhin ein länglicher Leiter zur Beleuchtung des beleuchteten Abschnitts vorhanden, der an der der sichtbaren Oberfläche abgewandten Seite angeordnet ist. Der beleuchtete Abschnitt wird mit Hilfe eines durchleuchtbaren Elementes ausgebildet, das sich zwischen der sichtbaren Oberfläche und dem Lichtleiter erstreckt.

Aus der DE 10 2012 015 057 A1 ist eine Beleuchtungsvorrichtung für ein Kraftfahrzeug mit einer Lichtquelle und einem Optikelement bekannt. Das Optikelement besitzt eine Lichtauskopplungsfläche und umfasst mindestens zwei Komponenten, wobei die erste Komponente des Optikelements aus einem lichtdurchlässigen Material und die zweite Komponente aus einem lichtundurchlässigen Material bestehen.

Aus der DE 10 2006 011 849 A1 ist ein Kraftfahrzeug mit einem im Bereich der Instrumententafel angeordneten und hinterleuchteten Dekorelement bekannt. Ein Teil des Dekorelements ist durch eine Keramikschicht gebildet, wobei die Keramikschicht unlösbar mit einem Kunststoffträgerteil des Dekorelementes verbunden ist. Das Kunststoffträgerteil kann auch aus einem lichtdurchlässigen Material hergestellt sein. Mittels von einer Lichtquelle eingekoppelten Lichts wird das Dekorelement hinterleuchtet.

DE 196 40 549 A1, DE 10 2014 226 146 A1, DE 10 2013 020 736 A1 und DE 10 2015 105 974 A1 offenbaren jeweils Beleuchtungsvorrichtungen, die einen Grundkörper mit Öffnungen aufweisen, in die lichtleitende Elemente eingesetzt sind. Hierüber ergeben sich abgeschottene Lichtleiter, die nicht von benachbarten Lichtleitern gestört werden. Die Herstellung solcher Beleuchtungsanordnungen ist aufwendig und erfordert die Bereitstellung separater Komponenten (Grundkörper, Lichtleiter) die in einem weiteren Verfahrensschritt miteinander verbunden werden müssen.

Nachteilig bei dem bekannten Stand der Technik ist, dass Beleuchtungsvorrichtungen stets aus mehreren, teils aus unterschiedlichen Materialien bestehenden, Elementen und/oder Komponenten zusammengefügt werden müssen, um eine Leitung und Lenkung des zur Hinterleuchtung oder Beleuchtung erforderlichen Lichts zu ermöglichen. Eine entsprechende Beleuchtungsvorrichtung nach dem Stand der Technik weist sowohl einen lichtleitenden Bereich, als auch nicht lichtleitenden Bereich auf. Der nicht lichtleitende Bereich schirmt den lichtleitenden Bereich ab. Zumeist erfolgt aber keine ausreichende Abschirmung des nicht lichtleitenden Bereichs, sodass eine klare Begrenzung der Beleuchtung nicht möglich ist. Bekannte Beleuchtungsvorrichtungen bestehen aus mehreren Komponenten, die nach deren Herstellung zusammengebaut werden müssen und erst dann die Beleuchtungsvorrichtung ausbilden. Nachteilig ist weiterhin, dass die Komponentenherstellung und deren Zusammenbau kostenintensiv und aufwändig sind und außerdem nicht flexibel an die Erfordernisse, insbesondere im Kraftfahrzeug, anpassbar sind.

Diese vorgenannten Nachteile beseitigt die vorliegende Erfindung.

Des Weiteren ist aus der DE 10 2009 011 948 A1 eine Anzeigevorrichtung für ein Fahrzeug bekannt, die einen Anzeigeschirm und eine Hintergrundbeleuchtung aufweist, wobei auf dem Anzeigeschirm beleuchtete Zeichen angeordnet, abgebildet oder aktiviert sind, und wobei die Hintergrundbeleuchtung des Anzeigeschirms mittels Leuchtmittel Licht in einen Lichtleitkörper emittiert, und wobei der Lichtleitkörper an einer Rückseite des Anzeigeschirms angeordnet ist. Der Lichtleiterkörper weist eine Lichtleiterplatte aus einer optisch transparenten Kunststoffmasse auf, in der optisch abschirmende Trennwände für optisch voneinander abgeschirmte Lichtleiterzonen des Lichtleiterkörpers mittels Laserbestrahlung der Kunststoffmasse eingebracht sind.

An der EP 0159529 A2 ist ein Laser-Verfahren zur Änderung von Materialeigenschaften insbesondere zur Kennzeichnung eines Kunststoffteiles unterhalb des Oberflächenbereiches bekannt, bei welchem mit mindestens einem Laserstrahl der Oberflächenbereich aus einem Kunststoff nahezu verlustlos durchstrahlt wird, um dann in einem folgenden unzugängigen Material-Bereich durch Absorption des Laserstrahles neue, bleibende, erfaßbare Materialeigenschaften hervorzurufen.

Aus der DE 20 2005 003 918 U1 sind Kunststoffformkörper mit im Inneren durch Laser-Innengravur erzeugten und zwei- oder dreidimensionalen Bildstrukturen bekannt, die aus Kunststoffmaterialien bestehen, die einen Gehalt an nanoskaligen Metalloxiden mit Partikelgröße von 1 bis 500 nm aufweisen, wobei sowohl das Kunststoffmaterial als auch das enthaltene Metalloxid für das zur Erzeugung der Bildstrukturen verwendete Laserlicht transparent ist.

Der Erfindung liegt die Aufgabe zugrunde, ein Verfahren zur Erzeugung mindestens eines Lichtschotts oder mindestens einer Grenzschicht in einem aus lichtdurchlässigem oder opakem Kunststoffmaterial bestehenden Lichtleitkörper anzugeben, bei welchem das Lichtschott oder die Grenzschicht einen durchleuchtbaren Bereich umgibt, wobei das Lichtschott den Lichtleitkörper in mindestens einen ersten Bereich und in mindestens einen zweiten Bereich unterteilt, wobei das mindestens eine Lichtschott zu einer verbesserten Minderung einer Überstrahlung des in den mindestens einen Bereich in den Lichtleitkörper eingekoppelten Lichts in den mindestens zweiten Bereich des Lichtleitkörpers dient.

Diese Aufgabe wird durch ein Verfahren mit den im Anspruch 1 angegebenen Merkmalen gelöst.

Gemäß diesem Verfahren wird zur Erzeugung mindestens eines Lichtschotts oder mindestens einer Grenzschicht in einem aus lichtdurchlässigem oder opakem Kunststoffmaterial bestehenden Lichtleitkörper, bei welchem mittels mindestens eines lichtemittierenden Elements Licht über eine Seite des Lichtleitkörpers in den Lichtleitkörper eingebracht wird, wodurch im Lichtleitkörper durch Materialveränderung der mindestens eine Lichtschott oder die mindestens eine Grenzschicht gebildet wird, wobei auf der Oberseite des Lichtleitkörpers unterhalb eines UV- oder IR- Strahlers eine Abschirmblende mit Durchbrüchen angeordnet wird und der UV- oder IR Strahler nur über die Durchbrüche in der Abschirmblende UV- oder IR- Strahlen in den Lichtleitkörper einbringt, sodass der UV- oder IR- Strahler nur über die Durchbrüche in der Abschirmblende den Bereich des Lichtleiterkörpers durchdringt, sodass nur in diesem Bereich befindliche reaktive transparente Pigmente, die im Lichtleitkörper verteilt angeordnet sind, aktiviert werden und durch Farbumschlag oder thermische Umwandlung des Lichtleitkörpers das mindestens eine Lichtschott oder die mindestens eine Grenzschicht bilden.

Weiterhin zeigt die vorliegende Erfindung eine Beleuchtungsvorrichtung für eine optische Anzeige im Innenraum eines Kraftfahrzeugs, aufweisend mindestens ein lichtemittierendes Element und einen aus lichtdurchlässigem oder opakem Kunststoffmaterial bestehenden Lichtleitkörper, wobei der Lichtleitkörper und das mindestens eine lichtemittierende Element derart angeordnet sind, dass vom mindestens einen lichtemittierenden Element emittiertes Licht in den Lichtleitkörper derart einkoppelbar ist, dass der Lichtleitkörper mindestens ein Lichtschott aufweist, das einen durchleuchtbaren Bereich umgibt, wobei
- das Lichtschott eine Grenzschicht aufweist, welche den Lichtleitkörper in mindestens einen ersten Bereich und in mindestens einen zweiten Bereich unterteilt,
- die mindestens eine Grenzschicht zur Verminderung oder Verhinderung der Überstrahlung des in den mindestens einen ersten Bereich in den Lichtleitkörper eingekoppelten Lichts in den mindestens zweiten Bereich des Lichtleitkörpers dient, und
- die Grenzschicht durch Materialveränderung im Lichtleitkörper gebildet ist, wobei
- im Lichtleitkörper reaktiv transparente Pigmente verteilt angeordnet sind,
- mittels mindestens eines UV- oder IR-Strahlers UV- oder IR-Strahlen über eine Seite des Lichtleitkörpers in den Lichtleitkörper einkoppelbar sind,
- die im Strahlkegel des UV- oder IR-Strahlers im Lichtleitkörper befindlichen reaktiven transparenten Pigmente aktiviert werden und durch Farbumschlag oder thermische Wandlung des Materials des Lichtleitkörpers den Lichtschott beziehungsweise die Grenzschicht ausbilden,
- auf der Oberseite des Lichtleitkörpers unterhalb des UV- oder IR-Strahlers eine Abschirmblende mit Durchbrüchen angeordnet ist,
- und der UV- oder IR-Strahler über die Durchbrüche in der Abschirmblende den Bereich des Lichtleitkörpers durchdringt, so dass nur die in diesem Bereich befindlichen reaktiven transparenten Pigmente aktiviert werden.

In einer vorteilhaften Ausgestaltung gemäß Patentanspruch 3 ist vorgesehen, dass die mindestens eine Grenzschicht den Lichtleitkörper in mindestens einer Ebene vollständig durchläuft.

In einer vorteilhaften Ausgestaltung gemäß Patentanspruch 4 ist vorgesehen, dass der Lichtleitkörper ein einziger auslichtdurchlässigem oder opakem Kunststoffmaterial hergestellter Körper ist.

In einer vorteilhaften Ausgestaltung gemäß Patentanspruch 5 ist vorgesehen, dass der Lichtleitkörper mindestens zwei Grenzschichten aufweist, die den mindestens ersten Bereich im Lichtleitkörper in mindestens zwei Ebenen umgeben, die sich quer durch den Lichtleitkörper erstrecken, und wobei der mindestens eine erste Bereich als Lichtleiter im Lichtleitkörper ausgebildet ist.

In einer vorteilhaften Ausgestaltung gemäß Patentanspruch 6 ist vorgesehen, dass die mindestens eine Grenzschicht zum mindestens einen ersten Bereich eine lichtreflektierende Oberfläche ausbildet.

Die vorliegende Erfindung zeigt nach alledem insbesondere ein Verfahren zur Erzeugung mindestens eines Lichtschotts oder mindestens einer Grenzschicht in einem aus lichtdurchlässigem oder opakem Kunststoffmaterial bestehenden Lichtleitkörper, wobei im Lichtleitkörper reaktiv transparente Pigmenten verteilt angeordnet sind und mittels mindestens eines UV- oder IR-Strahlers UV- oder IR-Strahlen über eine Seite des Lichtleitkörpers in den Lichtleitkörper eingebracht werden, wobei die im Strahlkegel des UV- oder IR-Strahlers im Lichtleitkörper befindlichen reaktiven transparenten Pigmenten aktiviert werden und durch Farbumschlag oder thermische Umwandlung des Materials des Lichtleitkörpers ein Lichtschott oder eine Grenzschicht ausbilden. Des Weiteren ist vorgesehen, dass auf der Oberseite des Lichtleitkörpers, unterhalb des UV- oder IR-Strahlers, eine Abschirmblende mit Durchbrüchen angeordnet wird, sodass der UV- oder IR-Strahler über die Durchbrüche in der Abschirmblende nur vorgewählte Bereiche des Lichtleitkörpers durchdringt und die in diesen Bereichen befindlichen reaktiven transparenten Pigmenten aktiviert werden.

Vorteilhafte Ausgestaltungen der Erfindung ergeben sich, der weiteren Beschreibung anhand der Figuren. In den Figuren dargestellte Ausführungsbeispiele sind nicht maßstäblich und können bei konkreter Ausgestaltung oder Ausführung oder Ausführungsverfahren vom Veranschaulichten abweichen.

In den Figuren zeigt:
- FIG 1: eine schematische Darstellung einer Beleuchtungsvorrichtung;
- FIG 2: eine schematische Anordnung zur Herstellung eines Lichtleiters in einem Lichtleitkörper;
- FIG 3: eine schematische Draufsicht auf eine Beleuchtungsvorrichtung;
- FIG 4: eine schematische Darstellung eines nicht erfindungsgemäßen Verfahrens zur Einbringung einer Grenzschicht in einen Lichtleitkörper;
- FIG 5: eine schematische Darstellung eines erfindungsgemäßen Verfahrens zur Einbringung einer Grenzschicht in einen Lichtleitkörper und
- FIG 6: eine alternative schematische Darstellung eines nicht erfindungsgemäßen Verfahrens zur Einbringung einer Grenzschicht in einen Lichtleitkörper.

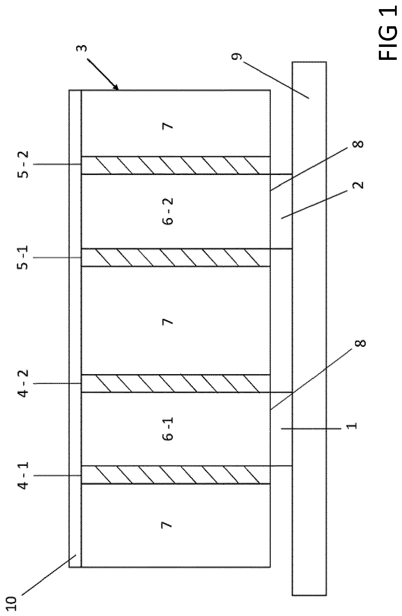

Im nachfolgenden wird die Erfindung anhand eines konkreten Ausführungsbeispiels exemplarisch anhand der beigefügten Figuren FIG 1 bis FIG 6 erläutert. Diese Beschreibung der Erfindung anhand eines konkreten Ausführungsbeispiele stellte keine Limitierung der Erfindung auf das konkrete Ausführungsbeispiel dar.

Bei der nachfolgenden Beschreibung werden figurenübergreifend für gleiche Elemente, soweit zum Verständnis dienlich, in den Figuren FIG 1 bis FIG 6 jeweils dieselben Bezugszeichen verwendet. Dies dient der Übersichtlichkeit und besseren Verständlichkeit der weiteren
konkreten Beschreibung anhand der Figuren FIG 1 bis FIG 6.

In FIG 1 ist eine schematische Darstellung einer Beleuchtungsvorrichtung dargestellt. Diese besteht im Wesentlichen aus einem Lichtleitkörper 3. Der Lichtleitkörper 3 ist aus einem einzigen lichtdurchlässigen oder opaken Kunststoffmaterial hergestellt und besitzt eine entsprechende gewünschte und vorwählbare Formausgestaltung und Größe. Gemäß der Ausgestaltung nach FIG 1 ist diese quaderförmig. Die Formausgestaltung und Größe des Lichtleitkörpers 3 ist gemäß dem Einsatzzweck der Beleuchtungsvorrichtung zu wählen. Die Beleuchtungsvorrichtung mit dem Lichtleitkörper 3 ist zum Einbauen in ein Kraftfahrzeug vorgesehen und soll dort z. B. mehrere Tasten einer Bedieneinheit, eingelassen im Armaturenbrett, beleuchten.

Am Lichtleitkörper 3 sind, in entsprechend vorgesehenen Aufnahmen 8, die LEDs 1, 2 anordenbar. Eine Aufnahme 8 ist in der Art ausgestaltet, dass eine LED 1; 2 mit dem Lichtleitkörper 3 verbunden werden kann, beispielsweise durch ein Verkleben, Verklipsen und/oder sonstiges verbinden. Die LEDs 1, 2 können aber auch auf einer Leiterplatte 9 angeordnet sein, wobei auf der Leiterplatte 9 die entsprechenden elektrischen Komponenten und Leitungen vorhanden sind, um die LEDs 1, 2 anzusteuern und mit elektrischer Energie in der Weise zu versorgen, dass diese Licht emittieren.

In einer vorteilhaften Ausgestaltung ist vorgesehen, dass die Aufnahme 8 in der Weise ausgestaltet ist, dass diese eine form- und/oder kraftschlüssige
Verbindung mit der Leiterplatte 9 eingeht. Hierbei können in einer vorteilhafter Ausgestaltung eine der LEDs 1; 2 oder beide LEDs 1, 2 in die Leiterplatte 9 eingelassen sein, sodass diese plan mit einer Seite der Leiterplatte 9 abschließen.

Im Lichtleitkörper 3 sind Lichtschotts in Form von Grenzschichten 4-1, 4-2, 5-1, 5-2 eingebracht. Diese Lichtschotts in Form von Grenzschichten 4-1, 4-2, 5-1, 5-2 bilden im Lichtleitkörper 3 Bereiche 6-1, 6-2 aus, in welchen Licht, emittiert von einer der LEDs 1; 2, durch den Lichtleitkörper 3 geführt werden und Bereiche 7, in welche nahezu kein von einer der LEDs 1; 2 emittiertes Licht gelangt.

Die Lichtschotts bzw. die Grenzschichten 4-1, 4-2, 5-1, 5-2 umschließen den Bereich 6-1; 6-2 in dem Licht, emittiert von einer der LEDs 1; 2 durch den Lichtleitkörper 3 geleitet werden soll und verhindern zugleich, dass von einer der LEDs 1; 2 in die Bereiche 6-1; 6-2 emittiertes Licht in die Bereiche 7 gelangt. Die Lichtschotts bzw. die Grenzschichten 4-1, 4-2, 5-1, 5-2 bilden quasi im Lichtleitkörper 3 Lichtleiter 6-1, 6-2 aus. Die LEDs 1, 2 sind am Lichtleitkörper 3 so angeordnet, dass diese das emittierte Licht nahezu vollständig in die Lichtleiter 6-1, 6-2 einkoppeln. Die Lichtleiter 6-1, 6-2 sind dazu vorgesehen, um das von den LEDs 1, 2 emittierte Licht von der Einkopplungseite des Lichtleitkörpers 3 zu einer anderen Seite des Lichtleitkörpers 3 zu leiten und dortig auszuleiten. An dieser Seite des Lichtleitkörpers 3 ist eine Blende 10 anordenbar. Auf bzw. in der Blende 10 sind die zu beleuchtenden Bereiche eingebracht, die über die LEDs 1, 2 zu beleuchten sind. Auf und/oder in der Blende 10 sind entsprechende Symbole eingebracht, die zu hinterleuchten sind.

Die Lichtschotts bzw. die Grenzschichten 4-1, 4-2, 5-1, 5-2 sind durch Einbringung von Laserenergie, exakt an den Stellen, an denen die Lichtschotts bzw. die Grenzschichten 4-1, 4-2, 5-1, 5-2 ausgebildet sein sollen, erzeugt, um gezielt das von den LEDs 1, 2 eingekoppelte Licht zu leiten und um zu verhindern, dass eine Einstrahlung in die Bereiche 7 erfolgt.

Zur Einbringung der Lichtschotts bzw. der Grenzschichten 4-1, 4-2, 5-1, 5-2 sind zwei Laser vorgesehen, mittels derer Energie an vordefinierten Stellen in den Lichtleitkörper 3 einbringbar ist, welche das Kunststoffmaterial aus dem der Lichtleitkörper 3 besteht, durch Einbringung der Laserenergie und der hierdurch erzeugten Erwärmung, verändern und umbildet und so die Lichtschotts bzw. die Grenzschichten 4-1, 4-2, 5-1, 5-2 im Lichtleitkörper 3 ausbildet.

Die Lichtschotts bzw. die Grenzschichten 4-1, 4-2, 5-1, 5-2 sind in der Weise ausgebildet, dass diese verhindert, dass von einer der LEDs 1, 2 emittiertes Licht aus dem Lichtleiter 6-1; 6-2 durch die Grenzschicht 4-1, 4-2; 5-1, 5-2 in einen nicht zu beleuchteten Bereich 7 des Lichtleitkörpers 3 gelangt. Hierbei ist insbesondere in einer vorteilhaften Ausgestaltung der Lichtschotts bzw. der Grenzschichten 4-1, 4-2, 5-1, 5-2 die dem Lichtleiter 6-1, 6-2 zugewandte Fläche lichtreflektierend ausgestaltet.

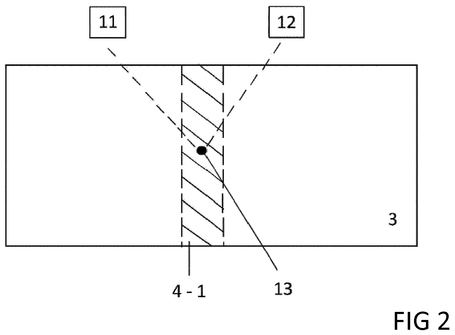

In FIG 2 ist ein Verfahren zur Einbringung einer Grenzschicht 4-1 in einen Lichtleitkörper 3 dargestellt. Der Lichtleitkörper 3 wird in bekannter Weise mittels eines Kunststoffspritzgießverfahrens in einem einzigen Verfahrensschritt hergestellt und besitzt eine vordefinierbare geometrische Form.

Dem Lichtleitkörper 3 sind an den Stellen, an denen eine Grenzschicht 4-1 in den Lichtleitkörper 3 einzufügen ist, in einer vorteilhaften Ausgestaltung Ionen oder Atome oder Kunststoffmoleküle zugefügt. Der Kunststoff ist entsprechend dotiert. Diese Ionen oder Atome oder Kunststoffmoleküle reagieren auf einen auftreffenden Laserstrahl indem sie Laserenergie in Wärmeenergie umwandeln und damit das sie umgebende Kunststoffmaterial aufschmelzen und/oder in dessen Struktur verändern. Hierdurch wird die Grenzschicht 4-1 ausgebildet.

In einer weiteren vorteilhaften Ausgestaltung sind die Ionen oder Atome oder Kunststoffmoleküle in der Weise gewählt, dass diese bei Auftreffen des Laserstrahls eine lichtreflektierende Grenzschicht 4-1 ausbilden.

Zur Einbringung der Grenzschicht 4-1 in den Lichtleitkörper 3 sind gemäß der Ausgestaltung nach FIG 2 zwei Laser 11 und 12 angeordnet. Die beiden Laser 11 und 12 sind in der Weise aufeinander abgestimmt, dass diese im Berührungspunkt 13 der Laserstrahlen dortig die Laserenergie freisetzten. Damit wird am Berührungspunkt 13 die Laserenergie freigesetzt, diese schmilzt das Kunststoffmaterial des Lichtleitkörpers 3 am Berührungspunkt 13 auf oder wandelt dieses um und erzeugt damit die Grenzschicht 4-1. Die Grenzschicht 4-1 ist in der Weise ausgestaltet, dass diese sichtbares Licht nicht durchlässt, sondern an der Grenzfläche 4-1 reflektiert.

Die beiden Laser 11, 12 werden nunmehr so gesteuert, dass der Berührungspunkt 13 durch den Lichtleitkörper 3 wandert und damit die Grenzschicht 4-1 im Lichtleitkörper ausbildet, wie vorherig beschrieben.

In einer abweichenden Ausgestaltung wird der Lichtleitkörper 3 auf einer in drei Ebenen veränderbaren Vorrichtung angeordnet. Die beiden Laser 11, 12 sind starr angeordnet und aufeinander derart abgestimmt, dass diese sich an einem vordefierbaren Berührungspunkt 13 treffen und dort ihre Energie freisetzen. Nunmehr wird, vor der Aktivierung der Laser 11, 12, auf der in drei Ebenen veränderbaren Vorrichtung der Lichtleitkörper 3 fixiert und in eine entsprechende Startposition verbracht. Sodann werden die Laser 11, 12 aktiviert und der Lichtleitkörper 3 wird über die in drei Ebenen veränderbare Vorrichtung in der Weise bewegt, dass der Berührungspunkt 13 durch den Lichtleitkörper 3 sich bewegt und sich die Grenzfläche 4-1 ausbildet. Sobald die Grenzfläche 4-1 komplett erzeugt ist, werden die Laser 11, 12 deaktiviert und der Lichtleitkörper 3 kann entnommen werden.

Auf diese Weise können in einen Lichtleitkörper 3 mehrere Grenzschichten 4-1 eingebracht werden. Es können durch eine geeignete Bewegung der in drei Ebenen veränderbaren Vorrichtung diverse geometrische Formen und/oder Flächen oder Flächenbereiche im Lichtleitkörper 3 ausgestaltet werden.

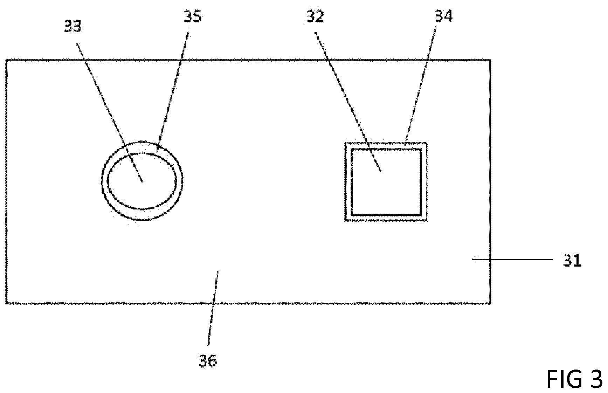

In FIG 3 ist eine Draufsicht auf einen entsprechend in vorbeschriebener Weise hergestellten Lichtleiterkörper 31 dargestellt. Der Lichtleitkörper 31 weist eine quaderförmige Form auf. In den Lichtleitkörper 31 sind Grenzschichten 34, 35 eingebracht, die den Lichtleiterkörper 31 durchlaufen. Die Grenzschicht 35 ist in Form eines Zylindermantels ausgestaltet, die Grenzschicht 34 ist als quadratisch ausgestaltet. Diese bilden im Lichtleitkörper 31 die Lichtleiter 32, 33 aus. Jenseits der Grenzschichten 34, 35 ist ein nicht beleuchteter Bereich 36 vorhanden, da durch die Grenzschichten 35, 36 in die Lichtleiter 32, 32 eingekoppeltes Licht die Grenzschichten 34, 35 nicht oder nur kaum durchdringt.

Die Grenzschichten 34, 35 verhindern eine Überstrahlung von Licht aus den Lichtleitern 32, 33 in den Bereich 36.

Indem die Grenzschichten 34, 35 den Lichtleitkörper 31 von einer Seite zu einer anderen Seite vollständig durchlaufen, kommt es kaum zu einer Einstrahlung von Licht in Bereiche jenseits der Grenzschichten 34, 35, sodass an der Lichtaustrittsseite sich am Lichtleitkörper 31 eine klare Umgrenzung des beleuchten bzw. zu beleuchtenden bzw. zu hinterleuchtenden Bereichs ergibt.

Gemäß der vorliegenden Erfindung ist vorgesehen, dass das Kunststoffmaterial, aus dem der Lichtleitkörper 3 besteht, mit reaktiv transparenten Pigmenten versetzt ist. Diese reaktiven transparenten Pigmente sind beispielsweise Farbumschlagpigmente, photochrome Pigmente und/oder thermochrome Pigmente. Durch einen hochgenauen Strahler sind die Pigmente aktivierbar und verändern, nach Aktivierung, ihre Farbe oder platzen auf und bilden so die Lichtschotts bzw. die Grenzschichten 4-1, 4-2, 5-1, 5-2 im Lichtleitkörper 3 aus.

Eine selektive Bestrahlung kann beispielsweise durch eine UV-Belichtung mittels einer Maske oder nach dem Prinzip einer Glasinnengravur erfolgen.

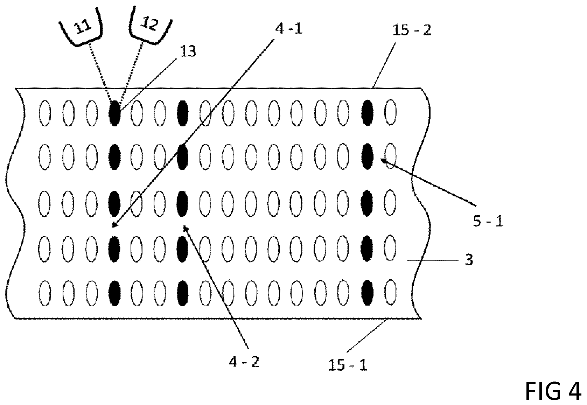

In FIG 4 ist eine nicht erfindungsgemäße schematische Darstellung eines Verfahrens zur Einbringung einer Grenzschicht 4-1 in einen Lichtleitkörper 3 dargestellt. Der Lichtleitkörper 3 ist, in bekannter Weise, mittels eines Kunststoffspritzgießverfahrens in einem einzigen Verfahrensschritt hergestellt und besitzt eine vordefinierte geometrische Form, in der Ausgestaltung nach Fig. 4 in Form eines Quaders. Der Lichtleitkörper 3 wird unterhalb zweier Laser 11 und 12 angeordnet, die ihre Laserstrahlen in einem Berührungspunkt 13 konzentrieren und dort, in beschriebener Weise, die Energie freisetzen. Damit kann nunmehr, von der Unterseite 15-1 des Lichtleitkörpers 3 in Richtung der Oberseite 15-2 des Lichtleitkörpers 3 der Berührungspunkt 13 verändert werden und damit, durch die bereits beschriebene thermische Umwandlung des Materials des Lichtleitkörpers 3 ein Lichtschott bzw. Grenzschichten 4-2, 5-1 eingebracht werden. Dies erfolgt vorzugsweise durch einen Farbumschlag des Kunststoffmaterials in den Berührungspunkten 13.

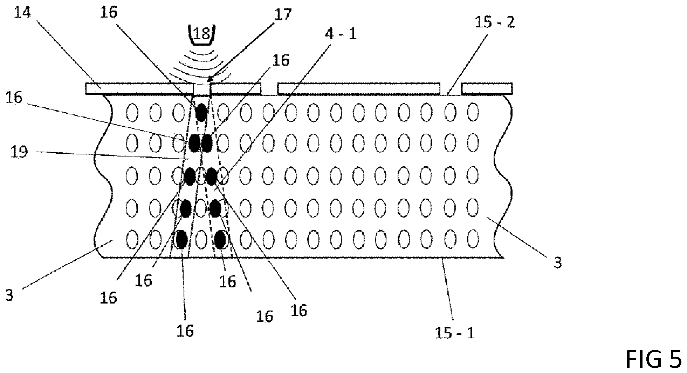

In Fig. 5 ist schematisch eine erfindungsgemäße Ausgestaltung eines Verfahrens zur Einbringung eines Lichtschotts bzw. einer Grenzschicht 4-1 in einen Lichtleitkörper 3 dargestellt. Es sind im Lichtleitkörper 3 reaktive Pigmente 16 vorhanden. Diese sind entweder im Lichtleitkörper 3 gleichverteilt oder stochastisch verteilt. Es ist ein selektiver hochpräziser Strahler 18 angeordnet.

Auf bzw. über die Oberseite 15-2 des Lichtleitkörpers 3 wird eine Blende 14 mit Löchern 17 in der Blende 14 gelegt. Anschließend wird der hochpräzise Strahler 18 aktiviert. Beim hochpräzisen Strahler 18 handelt es sich beispielsweise um einen UV-Strahler oder einen IR-Strahler.

Der Strahl des hochpräzisen Strahlers 18 wird nur durch das Loch 17 in der Blende 14 durchgelassen und breitet sich in Wellenform im Lichtleitkörper 3 von dessen Oberseite 15-2 zur Unterseite 15-1 aus. Alle in seiner Strahlausbreitung, seinem Strahlkegel 19, sich befindlichen reaktiven Pigmente 16 werden dadurch aktiviert und bilden in vorherig beschriebener Weise das Lichtschott bzw. die Grenzschicht 4-1 im Lichtleitkörper 3 aus.

Bei diesem Verfahren wird kein linear von der Unterseite 15-1 zur Oberseite 15-2 verlaufendes Lichtschott bzw. Grenzfläche 4-1 ausgebildet, dass Lichtschott bzw. Grenzfläche 4-1 besitzt vielmehr eine dreiecksform bzw. pyramidenform.

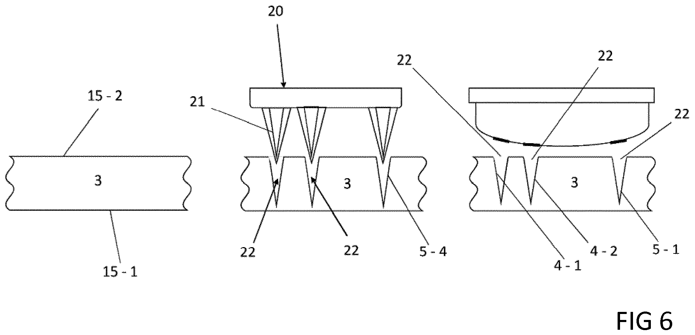

In Fig. 6 ist schematisch ein weiteres, nicht erfindungsgemäßes Verfahren zur Ausbildung von Lichtschotts bzw. Grenzschichten 4-1, 4-2, 5-1 in einem Lichtleitkörper 3 dargestellt. Der Lichtleitkörper 3 wird zunächst, in vorbeschriebener Weise, hergestellt. Er weist in der Ausgestaltung nach FIG 6 eine Quaderform auf.

Der Lichtleitkörper 3 wird unter einen Heißstempel 20 verbracht. Der Heißstempel 20 besitzt auf seiner Unterseite Ausformungen 21 in Form von Erhöhungen. In der Ausgestaltung nach FIG 6 sind diese Ausformungen pyramidenförmige kreiskegelförmige Erhöhungen; es kann aber eine jede andere Form zum Einsatz kommen. Der Heißstempel 20 wird erhitzt und die erhitzten Ausformungen 21 werden in den Lichtleitkörper 3 eingesenkt und/oder durch diesen hindurchgeführt. Das Kunststoffmaterial des Lichtleitkörpers 3 schmilzt an diesen Bereichen auf und wird entfernt. Es ergeben sich dann

Einschnitte 22 in den Lichtleitkörper 3. In der Ausgestaltung gemäß FIG 6 sind dies V-förmige Einschnitte, die den Lichtleitkörper 3 durchlaufen.

In einem nächsten Schritt wird der Lichtleitkörper 3 zu einem Tampondrucker bzw. Tamponierer 23 verbracht. Es werden mittels des Tamponierers 23 die Oberflächen der Einschnitte 22 im Lichtleitkörper 3 mit schwarzer Farbe bedeckt. Damit werden die Lichtschotts bzw. Grenzflächen 4-1, 4-2, 5-1 ausgebildet.

Eine alternative Ausgestaltung des Verfahrens ist vorgesehen, dass die V-förmigen Einschnitte 22 in Form von Einkerbungen eingebracht werden. Diese Einkerbungen können mittels eines Laserabtrages oder eines anderen mechanischen Verfahrens, wie z. B. Sägen, Fräsen etc. erzeugt werden. Anschließend werden die ausgebildeten Einkerbungen mit schwarzer Farbe bedruckt.

### Bezugszeichenliste

- 1, 2: LED
- 3: Lichtleitkörper
- 4-1, 4-2, 5-1, 5-2: Grenzschicht/Lichtschott
- 6-1, 6-2: Lichtleiter
- 7: nicht beleuchteter Bereich
- 8: Aufnahme
- 9: Leiterplatte
- 10: Blende
- 11, 12: Laser
- 13: Berührungspunkt
- 14: Blende
- 15-1: Unterseite des Lichtleitkörpers
- 15-2: Oberseite des Lichtleitkörpers
- 16: reaktive Pigmente
- 17: Loch (in Blende)
- 18: Strahler
- 19: Strahlausbreitung
- 20: Heißstempel
- 21: Ausformung
- 22: Einschnitte
- 23: Tamponierer

## Patentansprüche

1. Verfahren zur Erzeugung mindestens eines Lichtschotts oder mindestens einer Grenzschicht (4-1) in einem aus lichtdurchlässigem oder opakem Kunststoffmaterial bestehenden Lichtleitkörper (3), bei welchem mittels mindestens eines lichtemittierenden Elements Licht über eine Seite des Lichtleitkörpers in den Lichtleitkörper eingebracht wird, wodurch im Lichtleitkörper durch Materialveränderung der mindestens eine Lichtschott oder die mindestens eine Grenzschicht gebildet wird, **dadurch gekennzeichnet, dass** auf der Oberseite (15-2) des Lichtleitkörpers (3) unterhalb eines UV- oder IR-Strahlers eine Abschirmblende (14) mit Durchbrüchen (17) angeordnet wird und der UV- oder IR-Strahler (18) nur über die Durchbrüche (17) in der Abschirmblende (14) UV- oder IR-Strahlen in den Lichtleitkörper (3) einbringt, so dass der UV- oder IR-Strahler nur über die Durchbrüche (17) in der Abschirmblende (14)den Bereich des Lichtleitkörpers (3) durchdringt, so dass nur in diesem Bereich befindliche reaktive transparente Pigmente, die im Lichtleitkörper verteilt angeordnet sind, aktiviert werden und durch Farbumschlag oder thermische Umwandlung des Lichtleitkörpers (3) das mindestens eine Lichtschott oder die mindestens eine Grenzschicht bilden.

2. Beleuchtungsvorrichtung für eine optische Anzeige im Innenraum eines Kraftfahrzeugs, aufweisend mindestens ein lichtemittierendes Element (1, 2) und einen aus lichtdurchlässigem oder opakem Kunststoffmaterial bestehenden Lichtleitkörper (3), wobei der Lichtleitkörper (3) und das mindestens eine lichtemittierende Element(1, 2) derart angeordnet sind, dass vom mindestens einen lichtemittierenden Element (1, 2) emittiertes Licht in den Lichtleitkörper (3) derart einkoppelbar ist, **dass** der Lichtleitkörper (3) mindestens ein Lichtschott aufweist, das einen durchleuchtbaren Bereich umgibt, wobei
- das Lichtschott eine Grenzschicht (4-1, 4-2; 5-1, 5-2) aufweist, welche den Lichtleitkörper (3) in mindestens einen ersten Bereich (6-1; 6-2) und in mindestens einen zweiten Bereich (7) unterteilt,
- die mindestens eine Grenzschicht (4-1, 4-2; 5-1, 5-2) zur Verminderung oder Verhinderung der Überstrahlung des in den mindestens einen ersten Bereich (6-1; 6-2) in den Lichtleitkörper (3) eingekoppelten Lichts in den mindestens zweiten Bereich (7) des Lichtleitkörpers (3) dient, und
- die Grenzschicht durch Materialveränderung im Lichtleitkörper (3) gebildet ist,
**dadurch gekennzeichnet, dass**
- im Lichtleitkörper (3) reaktiv transparente Pigmente (16) verteilt angeordnet sind,
- mittels mindestens eines UV- oder IR-Strahlers (18) UV- oder IR-Strahlen über eine Seite (15-2) des Lichtleitkörpers (3) in den Lichtleitkörper (3) einkoppelbar sind,
- die im Strahlkegel (19) des UV- oder IR-Strahlers (18) im Lichtleitkörper (3) befindlichen reaktiven transparenten Pigmente (16) aktiviert werden und durch Farbumschlag oder thermische Wandlung des Materials des Lichtleitkörpers (3) den Lichtschott beziehungsweise die Grenzschicht (4-1) ausbilden,
- auf der Oberseite (15-2) des Lichtleitkörpers (3) unterhalb des UV- oder IR-Strahlers (18) eine Abschirmblende (14) mit Durchbrüchen (17) angeordnet ist,
- und der UV- oder IR-Strahler (18) über die Durchbrüche (17) in der Abschirmblende (14) den Bereich (19) des Lichtleitkörpers (3) durchdringt, so dass nur die in diesem Bereich befindlichen reaktiven transparenten Pigmente (16) aktiviert werden.

3. Beleuchtungsvorrichtung nach Patentanspruch 2, **dadurch gekennzeichnet, dass** die mindestens eine Grenzschicht (6-1, 6-2) den Lichtleitkörper (3) in mindestens einer Ebene vollständig durchläuft.

4. Beleuchtungsvorrichtung nach Patentanspruch 2 oder 3, **dadurch gekennzeichnet, dass** der Lichtleitkörper (3) ein einziger aus lichtdurchlässigem Kunststoffmaterial hergestellter Körper ist.

5. Beleuchtungsvorrichtung nach einem der Patentansprüche 2 bis 4, **dadurch gekennzeichnet, dass** der Lichtleitkörper (3) mindestens zwei Grenzschichten (4-1, 4-2; 5-1, 5-2) aufweist, die den mindestens einen ersten Bereich (6-1; 6-2) im Lichtleitkörper (3) in mindestens zwei Ebenen umgeben, die sich quer durch den Lichtleitkörper (3) erstrecken, und wobei der mindestens eine erste Bereich (6-1; 6-2) als Lichtleiter im Lichtleitkörper (3) ausgebildet ist.

6. Beleuchtungsvorrichtung nach einem der Patentansprüche 2 bis 5, **dadurch gekennzeichnet, dass** die mindestens eine Grenzschicht (4-1, 4-2; 5-1, 5-2) zum mindestens einen ersten Bereich (6-1; 6-2) eine lichtreflektierende Oberfläche ausbildet.

## Claims

1. Method of producing at least one light barrier or at least one boundary layer (4-1) in a light-conducting body (3), which consists of transparent or opaque plastics material and in which light is introduced into the light-conducting body via a side of the light-conducting body by means of at least one light-emitting element, wherein the at least one light barrier or the at least one boundary layer is formed in the light-conducting body by material change, **characterised in that** a shielding screen (14) with passages (17) is arranged on the upper side (15-2) of the light-conducting body (3) below a UV or IR radiator and the UV or IR radiator (18) introduces UV or IR beams into the light-conducting body (3) only by way of the passages (17) in the shielding screen (14) so that the UV or IR radiator penetrates the region of the light-conducting body (3) only by way of the passages (17) in the shielding screen (14), so that only reactive transparent pigments, which are arranged in distribution in the light-conducting body, present in this region are activated and form the at least one light barrier or the at least one boundary layer by colour change or thermal transformation of the light-conducting body (3).

2. Lighting device for an optical display in the interior space of a motor vehicle, comprising at least one light-emitting element (1, 2) and a light-conducting body (3) consisting of transparent or opaque plastics material, wherein the light-conducting body (3) and the at least one light-emitting element (1, 2) are arranged in such a way that light emitted by the at least one light-emitting element (1, 2) can be coupled into the light-conducting body (3) in such a way that the light-conducting body (3) has at least one light barrier surrounding a transilluminatable region, wherein
- the light barrier has a boundary layer (4-1, 4-2; 5-1, 5-2), which divides the light-conducting body (3) into at least one first region (6-1; 6-2) and at least one second region (7),
- the at least one boundary layer (4-1, 4-2; 5-1, 5-2) serves for reducing or preventing radiation of the light, which is coupled into the at least one first region (6-1; 6-2) in the light-conducting body (3), over into the at least second region (7) of the light-conducting body (3), and
- the boundary layer is formed by material change in the light-conducting body (3),
**characterised in that**
- reactive transparent pigments (16) are arranged in distribution in the light-conducting body (3),
- UV or IR beams can be coupled into the light-conducting body (3) via a side (15-2) of the light-conducting body (3) by means of at least one UV or IR radiator (18),
- the reactive transparent pigments (16) present in the light-conducting body (3) in the beam cone (19) of the UV or IR radiator (18) are activated and form the light barrier or the boundary layer (4-1) by colour change or thermal transformation of the material of the light-conducting body (3),
- a shielding screen (14) with passages (17) is arranged on the upper side (15-2) of the light-conducting body (3) below the UV or IR radiator (18) and
- the UV or IR radiator (18) penetrates the region (19) of the light-conducting body (3) by way of the passages (17) in the shielding screen (14) so that only the reactive transparent pigments (16) present in this region are activated.

3. Lighting device according to claim 2, **characterised in that** at least one boundary layer (6-1, 6-2) passes completely through the light-conducting body (3) in at least one plane.

4. Lighting device according to claim 2 or 3, **characterised in that** the light-conducting body (3) is a single body produced from transparent plastics material.

5. Lighting device according to any one of claims 2 to 4, **characterised in that** the light-conducting body (3) has at least two boundary layers (4-1, 4-2; 5-1, 5-2) which surround the at least one first region (6-1; 6-2) in the light-conducting body (3) in at least two planes extending transversely through the light-conducting body (3) and wherein the at least one first region (6-1; 6-2) is formed as an optical waveguide in the light-conducting body (3).

6. Lighting device according to any one of claims 2 to 5, **characterised in that** the at least one boundary layer (4-1, 4-2; 5-2, 5-2) forms a light-reflecting surface with respect to at least one first region (6-1; 6-2).

## Revendications

1. Procédé en vue de la production d'au moins une cloison lumineuse ou d'au moins une couche limite (4-1) dans un corps conducteur de lumière composé d'un matériau plastique translucide ou opaque (3) dans lequel on introduit de la lumière grâce à au moins un élément émetteur de lumière via un côté du corps conducteur de lumière, ce qui permet de former dans le corps conducteur de lumière par changement de matériau au moins une cloison lumineuse ou au moins une couche limite, **caractérisé par le fait qu'**un écran de protection (14) est disposé avec des percées (17) sur le côté supérieur (15-2) du corps conducteur de lumière (3) sous un projecteur UV ou IR et que le projecteur UV ou IR (18) introduit des rayons UV ou IR dans le corps conducteur de lumière (3) uniquement via les percées (17) dans l'écran (14) afin que le projecteur UV ou IR pénètre la zone du corps conducteur de lumière (3) uniquement via les percées (17) dans l'écran (14), de façon à n'activer que les pigments transparents réactifs situés dans cette zone et répartis dans le corps conducteur de lumière et à ce qu'ils forment la cloison lumineuse minimale ou la couche limite minimale par changement de couleur ou conversion thermique du corps conducteur de lumière (3).

2. Dispositif d'éclairage pour un affichage optique à l'intérieur d'un véhicule, lequel présente au moins un élément émetteur de lumière (1, 2) et un corps conducteur de lumière (3) composé d'un matériau plastique translucide ou opaque, alors que le corps conducteur de lumière (3) et l'élément émetteur de lumière minimal (1, 2) sont disposés de façon à ce que la lumière émise d'au moins un élément émetteur de lumière (1,2) dans le corps conducteur de lumière (3) puisse être injectée de telle sorte **que** le corps conducteur de lumière(3) présente au moins une cloison lumineuse qui entoure une zone transparente, tandis que
- la cloison lumineuse présente une couche limite (4-1, 4-2 ; 5-1, 5-2) qui divise le corps conducteur de lumière (3) en au moins une première zone (6-1 ; 6-2) et en au moins une deuxième zone (7),
- la couche limite minimale (4-1, 4-2 ; 5-1, 5-2) pour réduire ou empêcher la surexposition de la lumière injectée dans la première zone minimale (6-1 ; 6-2) dans le corps conducteur de lumière (3) sert dans la deuxième zone minimale (7) du corps conducteur de lumière (3), et
- la couche limite est formée par changement de matériau dans le corps conducteur de lumière (3),
**caractérisé par le fait que**
- des pigments transparents réactifs (16) sont répartis dans le corps conducteur de lumière (3),
- des rayons UV ou IR peuvent être injectés dans le corps conducteur de lumière (3) grâce à au moins un projecteur UV ou IR (18) via un côté (15-2) du corps conducteur de lumière (3),
- les pigments transparents réactifs (16) qui se trouvent dans le cône de rayonnement (19) du projecteur UV ou IR (18) dans le corps conducteur de lumière (3) sont activés et forment la cloison lumineuse ou la couche de limite (4-1) par changement de couleur ou conversion thermique du matériau du corps conducteur de lumière (3),
- un écran de protection (14) avec percées (17) est disposé sur le côté supérieur (15-2) du corps conducteur de lumière (3) sous le projecteur UV ou IR (18),
- et le projecteur UV ou IR (18) pénètre la zone (19) du corps conducteur de lumière (3) via les percées (17) dans l'écran (14) pour que seuls les pigments transparents réactifs (16) situés dans cette zone soient activés.

3. Dispositif d'éclairage selon la revendication de brevet 2, **caractérisé par le fait que** la couche limite minimale (6-1, 6-2) traverse entièrement le corps conducteur de lumière (3) à au moins un niveau.

4. Dispositif d'éclairage selon la revendication 2 ou 3, **caractérisé par le fait que** le corps conducteur de lumière (3) est un seul corps fabriqué en matériau plastique translucide.

5. Dispositif d'éclairage selon l'une des revendications 2 à 4 **caractérisé par le fait que** le corps conducteur de lumière (3) présente au moins deux couches limites (4-1, 4-2 ; 5-1, 5-2) qui entourent la première zone minimale (6-1 ; 6-2) dans le corps conducteur de lumière (3) à au moins deux niveaux qui s'étendent à travers le corps conducteur de lumière (3), et où la première zone minimale (6-1 ; 6-2) est formée en tant que conducteur de lumière au sein du corps conducteur de lumière (3) .

6. Dispositif d'éclairage selon l'une des revendications 2 à 5, **caractérisé par le fait que** la couche limite minimale (4-1, 4-2 ; 5-1, 5-2) forme une surface réfléchissante pour au moins une première zone (6-1 ; 6-2).
